(19) **Europäisches Patentamt**

**European Patent Office**

**Office européen des brevets**

(11) **EP 0 973 013 B1**

(12) **EUROPÄISCHE PATENTSCHRIFT**

(45) Veröffentlichungstag und Bekanntmachung des Hinweises auf die Patenterteilung:
**02.01.2002   Patentblatt 2002/01**

(51) Int Cl.$^7$: **G01D 5/244**

(21) Anmeldenummer: **99107692.8**

(22) Anmeldetag: **17.04.1999**

(54) **Wegsensor**

Displacement sensor

Capteur de déplacement

(84) Benannte Vertragsstaaten:
**DE ES FR GB IT**

(30) Priorität: **16.07.1998   DE 19831960**

(43) Veröffentlichungstag der Anmeldung:
**19.01.2000   Patentblatt 2000/03**

(73) Patentinhaber: **Valeo Schalter und Sensoren GmbH**
**74321 Bietigheim-Bissingen (DE)**

(72) Erfinder:
• **Traub, Harald**
  **74211 Leingarten (DE)**
• **Neckel, Klaus**
  **71665 Vaihingen (DE)**
• **Wigger, Bernd**
  **74366 Kirchheim/Neckar (DE)**
• **Haas, Philip**
  **89134 Blaustein (DE)**

(74) Vertreter: **Dreiss, Fuhlendorf, Steimle & Becker**
**Patentanwälte, Postfach 10 37 62**
**70032 Stuttgart (DE)**

(56) Entgegenhaltungen:
EP-A- 0 490 206          EP-A- 0 724 137
DE-A- 4 419 050          DE-A- 19 545 999

**Beschreibung**

Die vorliegende Erfindung betrifft ein Verfahren zum Messen einer Wegänderung eines bewegbaren Teils relativ zu einem festen Bezugspunkt, bei dem eine mit dem bewegten Teil verbundene Inkrementalspur an dem Bezugspunkt digital abgetastet wird und aus dem Ergebnis der digitalen Abtastung ein Ausgangssignal erzeugt wird, das ein Maß für die Wegänderung ist, und bei dem die digitale Abtastung zur Grobbestimmung der Wegänderung dient, wobei zur Feinbestimmung der Wegänderung die Inkrementalspur an dem Bezugspunkt an zwei zueinander phasenverschobenen Stellen analog abgetastet wird und wobei die so erhaltenen analogen Einzelsignale zu einem analogen Summensignal addiert werden.

Die vorliegende Erfindung betrifft außerdem einen Weggeber nach dem Oberbegriff des zweiten unabhängigen Anspruchs.

Derartige Messverfahren und Weggeber sind aus dem Stand der Technik bekannt. Durch eine entsprechende Umrechung des Wertes für die gemessene Wegänderung in einen Wert für eine Winkeländerung, kann ein Weggeber auch als Winkelgeber zum Messen der Winkeländerung einer Geberscheibe eingesetzt werden. Für einen Wert s einer gemessenen Wegänderung ergibt sich abhängig vom Radius R der Inkrementalspur auf einer Geberscheibe der Wert φ für die Winkeländerung aus der Gleichung:

$$\phi = 360° \times s / 2 \times Pi \times R$$

Winkelgeber werden beispielsweise auf dem Gebiet der Kraftfahrzeugtechnik als Lenkwinkelsensoren eingesetzt. Die Winkelinformationen werden interruptgesteuert erfasst. Die Interrupts werden über die Inkrementalspur der Geberscheibe ausgelöst und signalisieren ein Weiterdrehen der Geberscheibe um einen bestimmten Winkelwert. Dieser Winkelwert bestimmt die Auflösung und damit auch die Genauigkeit des Lenkwinkelsensors. Die Daten, die von dem Lenkwinkelsensor ausgegeben werden, wie die Winkeländerung und die Winkelgeschwindigkeit, werden in einem bestimmten Zeittakt, beispielsweise über einen echtzeitfähigen Bus (CAN), zur Weiterverarbeitung ausgegeben. Durch die vorgegebene Auflösung und die Geschwindigkeit der Winkeländerung wird der Zeittakt der Ausgabe der auszugebenden Daten festgelegt. Je größer die Auflösung und je geringer die Geschwindigkeit der Winkeländerung ist, desto länger muß der Zeittakt gewählt werden.

In der gattungsbildeden DE 44 19 050 A1 ist eine Positionsmessvorrichtung offenbart, bei der Messfehler durch eine Normierung der erhaltenen Sinussignale mit maximalen und minimalen Amplitudenwerten und durch verschiedene Additions- und Subtraktionsschritte eliminiert werden sollen. Der erhaltene genaue Wert wird dann zu einem Grobwert hinzu addiert.

Die EP 0 490 206 A1 beschreibt einen Wegsensor mit zwei nebeneinander angeordneten Detektionseinrichtungen, von denen eine eine inkrementale und die andere eine absolute Spur auf einem Lineal ausliest.

In der DE 195 45 999 A1 ist ein inkrementaler Stellungsgeber gezeigt, bei dem die Bewegungsrichtung des bewegten Teils durch auf das Abtastmedium unterschiedlich stark einwirkende Markierungen ermittelt werden kann.

Die bekannten Lenkwinkelsensoren haben den Nachteil, dass sie eine relativ geringe Auflösung haben. Dies führt dazu, dass die Daten, die von dem Lenkwinkelsensor ausgegeben werden, für bestimmte Anwendungen nicht die erforderliche Genauigkeit aufweisen. Außerdem können bei einer groben Auflösung in Verbindung mit einer geringen Geschwindigkeit der Winkeländerung die von dem Lenkwinkelsensor auszugebenden Daten nur in einem sehr langen Zeittakt aktualisiert werden, wodurch die Genauigkeit der Weiterverarbeitung wesentlich beeinträchtigt wird.

Das gattungsbildende Verfahren hat den Nachteil, dass es einen hohen Rechenaufwand erfordert, um zu einer akzeptablen Messgenauigkeit zu kommen. Ferner sind sinusförmige Signale erforderlich, um die notwendigen mathematischen Operationen durchführen zu können. Solche exakt sinusförmigen Signale liegen jedoch oft nicht vor.

Die Aufgabe der vorliegenden Erfindung besteht deshalb darin, das Verfahren der eingangs genannten Art dahingehend weiterzubilden, dass die Auflösung der Messung einer Wegänderung entscheidend erhöht wird, um dadurch die Genauigkeit der Messung einer Wegänderung erhöhen und die Taktzeit für die Ausgabe der auszugebenden Daten verringern zu können.

Das erfindungsgemäße Verfahren löst die voranstehende Aufgabe durch die Merkmale des ersten unabhängigen Patentanspruchs. Danach ist das eingangs bereits erörterte gattungsbildende Verfahren zum Messen einer Wegänderung derart ausgestaltet, dass die beiden analogen Einzelsignale bezüglich ihrer Amplituden ausgewertet werden, abhängig von diesem Vergleich dem Wert des ersten analogen Summensignals ein erster oder ein zweiter Kennlinienwert aus einer Look-up-Tabelle zugeordnet wird und aus der Summe des Ergebnisses der digitalen Abtastung und dem Kennlinienwert ein korrigiertes Ausgangssignal gebildet wird.

Erfindungsgemäß ist erkannt worden, dass die Auflösung der Messung einer Wegänderung dadurch entscheidend erhöht werden kann, daß zunächst eine Grobbestimmung der Wegänderung durchgeführt wird und der gemessene Wert der Grobbestimmung dann mittels des gemessenen Wertes der Feinbestimmung korrigiert wird. Anhand der Inkrementalspur wird neben der Messung der Wegänderung mittels digitaler Abtastung auch die Feinbestimmung des gemessenen Werts für die Wegänderung durchgeführt. Zur Feinbestimmung der Wegänderung wird die Inkrementalspur analog abgetastet. Das Ausgangssignal, das zunächst das Ergebnis der Grobbestimmungg ist, wird dann mithilfe des Ergebnisses der analogen Abtastung korrigiert.

Auf der Inkremenatalspur ist eine Codierung aufgebracht, die sich innerhalb einer bestimmten Periode wiederholt. Das Signal der analogen Abtastung wiederholt sich innerhalb dieser Periode. Zur Grobbestimmung der Wegänderung werden im Rahmen der digitalen Abtastung die einzelnen Lücken in der Codierung bewegungsrichtungsabhängig gezählt. Die Auflösung der Grobbestimmung entspricht der Periode der Codierung der Inkrementalspur. Das Ergebnis der digitalen Abtastung, nämlich die Summe der gezählten Lücken, liefert einen ersten Wert für die Wegänderung, Gleichzeitig wird die Inkrementalspur aber auch analog abgetastet. Die analoge Abtastung liefert innerhalb der Periode, in der das Ergebnis der Grobbestimmung liegt, einen Relativwert für die Wegänderung. Innerhalb dieser Periode lässt sich die Wegänderung durch die Feinbestimmung mit einer wesentlich höheren Auflösung bestimmen, als dies im Rahmen der Grobbestimmung möglich wäre.

Aufgrund der höheren Auflösung des erfindungsgemäßen Messverfahrens kann die Wegänderung und die Geschwindigkeit der Wegänderung mit einer wesentlich besseren Genauigkeit ermittelt werden. Außerdem kann beim Einsatz des erfindungsgemäßen Messverfahrens in Lenkwinkelsensoren die Taktrate zur Ausgabe der auszugebenden Daten, wie der Winkeländerung und der Winkelgeschwindigkeit, erheblich erhöht werden, d. h. die einzelnen Zeitabschnitte zwischen der Ausgabe von Daten können erheblich verkürzt werden. Dadurch kann die Genauigkeit der Weiterverarbeitung der Daten entscheidend erhöht werden.

Die Kennlinienwerte in der Look-up-Tabelle haben vorteilhafterweise eine höhere Auflösung als die Auflösung der Grobbestimmung. Das korrigierte Ausgangssignal wird aus der Summe des Ergebnisses der digitalen Abtastung und des Kennlinienwertes gebildet.

Es ist denkbar, die digitale Abtastung und die analoge Abtastung mit zwei verschiedenen Abtasteinheiten auszuführen. Gemäß einer vorteilhaften Weiterbildung der Erfindung wird die Inkrementalspur jedoch lediglich analog abgetastet und das Signal der analogen Abtastung für die digitale Abtastung digitalisiert. Auf diese Weise kann eine digitale Abtasteinheit eingespart werden. Zur Abtastung der Inkrementalspur bedarf es nur einer einzigen Abtasteinheit, die ein analoges Signal liefert. Das analoge Signal wird digitalisiert und dann zur Grobbestimmung der Wegänderung verwendet. Zur Feinbestimmung wird das analoge Signal unmittelbar herangezogen. Das Signal der analogen Abtastung wird vorteilhafterweise mittels eines A/D-Wandlers digitalisiert.

Gemäß einer vorteilhaften Weiterbildung der Erfindung wird vorgeschlagen, dass die analoge Abtastung mittels mindestens einer elektromagnetischen Strahlenquelle und mindestens einem Empfänger für elektromagnetische Strahlung erfolgt. Vorteilhafterweise erfolgt die analoge Abtastung mittels zweier elektromagnetischer Strahlenquellen, denen jeweils ein Empfänger für elektromagnetische Strahlung zugeordnet ist, wobei die analogen Einzelsignale der Empfänger zu dem Signal der analogen Abtastung addiert werden. Die Codierung der Inkrementalspur kann beispielsweise induktiv mittels einer magnetischen Codierung auf der Inkrementalspur und einer Induktionsspule, magnetisch mittels einer magnetischen Codierung auf der Inkrementalspur und eines Magnetsensors oder optoelektronisch erfolgen.

Die optoelektronische Abtastung der Codierung der Inkrementalspur erfolgt vorteilhafterweise mittels zweier Lichtquellen und zweier Lichtsenoren. Der Einsatz von Infrarot-Leuchtdioden (IR-LED) als Lichtquellen für die analoge Abtastung ist besonders vorteilhaft. Als Lichtsensoren für die analoge Abtastung werden vorteilhafterweise Fototransistoren eingesetzt. Es ist denkbar, die Lichtquellen und die den Lichtquellen zugeordneten Lichtsensoren auf der gleichen Seite der Inkrementalspur anzuordnen. In diesem Fall würde die Messung im reflektierten Licht erfolgen. Vorteilhafterweise werden die Lichtquellen und die den Lichtquellen zugeordneten Lichtsensoren jedoch auf entgegengesetzten Seiten der Inkrementalspur angeordnet. In diesem Fall erfolgt die Messung im durchgehenden Licht.

Im Rahmen der analogen Abtastung trifft das von der Infrarot-Leuchtdiode ausgesendete Licht, welches nicht durch die Codierung der Inkrementalspur unterbrochen wird, auf den Fototransistor. Je nach bestrahlter Fläche und Lichtintensität wird der Fototransistor durchgesteuert. Die am Fototransistor abfallende Spannung ist bei gleichbleibender Intensität des Lichtstrahls somit ein Indikator für die Lage der Inkrementalspur relativ zu dem Bezugspunkt.

Gemäß einer vorteilhaften Weiterbildung der Erfindung werden die Sensorelemente, bestehend aus Lichtquelle und Lichtsensor, derart zueinander versetzt angeordnet, dass die Abtastpunkte auf der Inkrementalspur abhängig von der Auflösung $\Delta s$ der Grobbestimmung, d. h. der Periode der Codierung der Infrarotspur, um

$$s_{vers} = (n - 1/4) \cdot \triangle s, \text{ mit } n = 1, 2, 3, ...$$

versetzt sind. Durch die Verwendung von zwei Sensorelementen, die dementsprechend versetzt angeordnet sind, ist es möglich, eine ganze Periode der Codierung auf der Inkrementalspur analog aufzulösen. Bei Verwendung von zwei zueinander versetzt angeordneten Sensorelementen kann vorteilhafterweise durch eine Ermittlung der Phasenverschiebung der analogen Einzelsignale der beiden Empfänger die Bewegungsrichtung der Inkrementalspur bestimmt werden.

Gemäß einer vorteilhaften Weiterbildung der Erfindung wird vorgeschlagen, dass von dem korrigierten Ausgangssignal der Offset zwischen Feinbestimmung und Grobbestimmung der Wegänderung subtrahiert wird. Der Offset hat seine Ursache in Fertigungstoleranzen sowie in Toleranzen bei der digitalen Abtastung. Der Offset wird vorteilhafterweise dadurch ermittelt, dass der gemessene Wert der Feinbestimmung mit dem gemessenen Wert der Grobbestimmung dann verglichen wird, wenn das digitalisierte Signal der analogen Abtastung eine steigende Flanke aufweist.

Gemäß einer anderen vorteilhaften Weiterbildung der Erfindung werden die Kennlinien der Empfänger derart dynamisch geregelt, dass die Empfänger stets in ihrem Arbeitspunkt arbeiten. Sowohl der Fototransistor als auch die IR-LED sind stark temperaturabhängig. Die Strahlstärke der IR-LED und die Empfindlichkeit des Fototransistors nimmt über die Lebensdauer ab. Die Abnahme wird durch das Beschlagen oder Trüben der Plastiklinsen hervorgerufen. Um die Einflüsse von Temperaturschwankungen und des Alterungsprozesses ausgleichen zu können, bedarf es einer dynamischen Kennlinienregelung. Sie soll insbesondere ein Wegdriften der Kennlinie des Fototransistors aus dem Arbeitspunkt des Fototransistors verhindern.

Für die dynamische Kennlinienregelung werden vorteilhafterweise die Maxima der analogen Einzelsignale ermittelt, wird die Lage der Maxima mit einem Sollwert verglichen und bei einer Differenz zwischen Ist- und Sollwert eine Korrektur durchgeführt. Die Korrektur erfolgt vorteilhafterweise durch Verschieben der Kennlinie des Empfängers in den Arbeitspunkt des Empfängers durch Verändern des IR-LED-Stroms.

Vor dem Beenden des Messverfahrens werden die IR-LED-Ströme vorteilhafterweise abgespeichert. Nach dem Beginn eines neuen Messvorganges können diese abgespeicherten Werte der IR-LED-Ströme als Anfangswerte für die dynamische Kennlinienregelung verwendet werden.

Gemäß einer vorteilhaften Weiterbildung der Erfindung werden die Signale der analogen Abtastung mittels eines Tiefpass-Filters geglättet. Der Tiefpass-Filter weist vorteilhafterweise eine Grenzfrequenz von ungefähr dem zehnfachen der höchsten Frequenz der Signale der analogen Abtastung auf.

Gemäß einer anderen vorteilhaften Weiterbildung der Erfindung wird im Rahmen einer Plausibilitätsprüfung vor der Ausgabe des korrigierten Ausgangssignals dieses mit dem Ergebnis der Grobbestimmung verglichen und, falls die Differenz zwischen dem korrigierten Ausgangssignal und dem Ergebnis der Grobbestimmung einen Schwellenwert übersteigt, das Ergebnis der Grobbestimmung anstatt des korrigierten Ausgangssignals ausgegeben. Auf diese Weise wird die Sicherheit des Verfahrens erheblich verbessert, da trotz des Ausfalls der Feinbestimmung ein Ausgangssignal ausgegeben wird, welches eine Genauigkeit herkömmlicher bekannter Messverfahren aufweist.

Der Schwellenwert wird vorteilhafterweise gleich einem Drittel der maximalen Auflösung der Grobbestimmung gewählt.

Der vorliegenden Erfindung liegt außerdem die Aufgabe zugrunde, einen Weggeber zum Messen von Wegänderungen der eingangs genannten Art dahingehend weiterzubilden, dass die Auflösung der Messung einer Wegänderung entscheidend erhöht wird.

Der erfindungsgemäße Weggeber löst die voranstehende Aufgabe durch die Merkmale des zweiten unabhängigen Patentanspruchs.

Gemäß einer vorteilhaften Weiterbildung der Erfindung arbeitet der Weggeber nach dem oben genannten Verfahren.

Der erfindungsgemäße Weggeber ist vorteilhafterweise als Winkelgeber ausgebildet, insbesondere als Lenkwinkelsensor zur Bestimmung des Lenkradeinschlags in Kraftfahrzeugen.

Es gibt nun verschiedene Möglichkeiten, die Lehre der vorliegenden Erfindung in vorteilhafter Weise auszugestalten und weiterzubilden. Dazu ist einerseits auf die den Patentansprüchen nachgeordneten Ansprüche und andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen des beanspruchten Verfahrens erläutert.

In der Zeichnung zeigt:

Fig. 1 einen Ausschnitt im Bereich des Bezugspunktes einer Geberscheibe mit Inkrementalspur und Codierung eines erfindungsgemäßen Weggebers in einer ersten Ausführungsform,

Fig. 2 ein Diagramm der Signalverläufe bei dem erfindungsgemäßen Weggeber gemäß Fig. 1 und

Fig. 3 einen Ausschnitt einer Periode der Codierung der Inkrementalspur des analogen Summensignals des erfindungsgemäßen Weggebers gemäß Fig. 1.

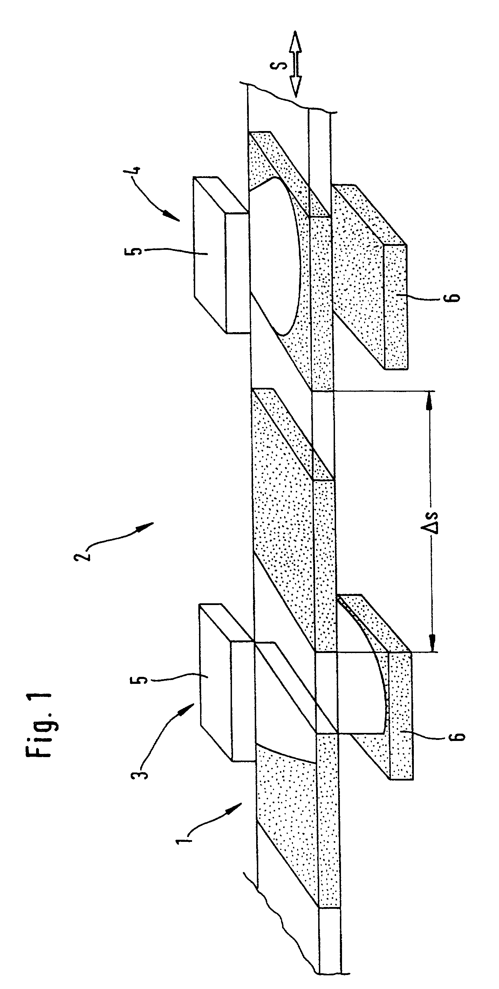

In Fig. 1 ist ein erfindungsgemäßer Wegsensor in einer ersten Ausführungsform im Ausschnitt dargestellt. Der dargestellte Wegsensor ist als Lenkwinkelsensor zur Bestimmung des Lenkradeinschlags in Kraftfahrzeugen ausgebildet. Der Lenkwinkelsensor dient zum Messen einer Winkeländerung einer mit einem Lenkrad eines Kraftfahrzeugs verbundenen Geberscheibe. Auf der Geberscheibe ist eine Inkrementalspur 1 angeordnet, welche durch eine Abtasteinheit 2 mittels abgetastet wird. Die optoelektronische Abtasteinheit 2 weist zwei Sensorelemente 3, 4 auf, welche ihrerseits jeweils aus einer Infrarot-Leuchtdiode 5 und einem Fototransistor 6 bestehen. Die Sensorelemente 3 und 4 sind derart zueinander versetzt angeordnet, daß die Abtastpunkte auf der Inkrementalspur 1 abhängig von der Auflösung $\Delta s=6°$ der Grobbestimmung, d. h. der Periode der Codierung der Inkrementalspur 1, um

$$s_{\text{vers}} = (n - 1/4) \cdot \triangle s = (1 - 1/4) \cdot 6° = 4,5°$$

versetzt sind.

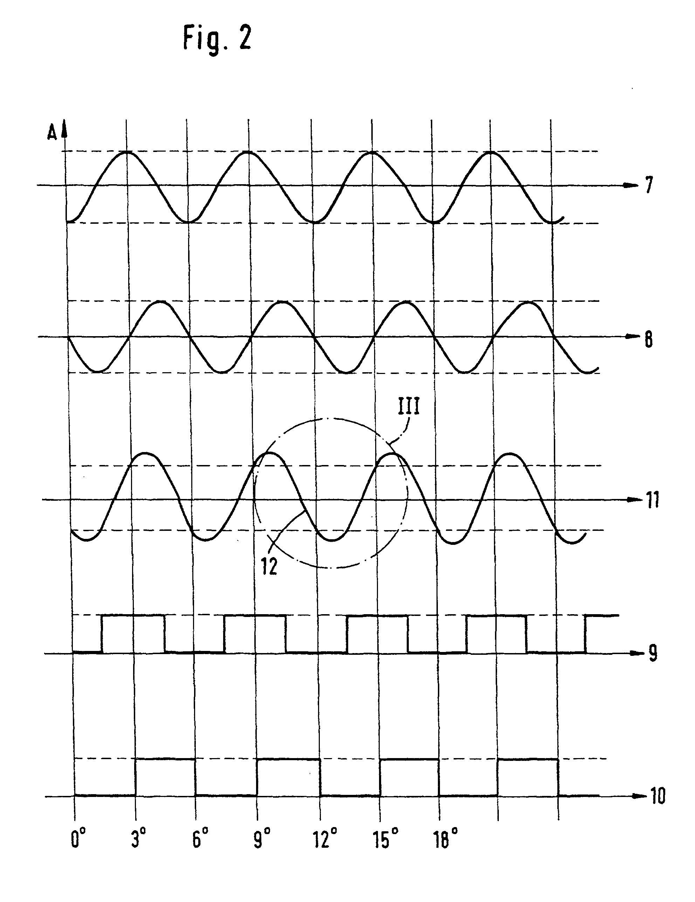

Die Abtastung der Codierung der Inkrementalspur 1 erfolgt analog. Jedes der Sensorelemente 3, 4 liefert ein analoges Einzelsignal 7, 8 (vgl. Fig. 2) mit der Periode der Codierung. ^Aufgrund der Positionierung der beiden Sensorelemente 3, 4 zueinander, sind die beiden analogen Einzelsignale 7, 8 um 4,5° zueinander phasenverschoben.

Die beiden analogen Einzelsignale 7, 8 werden für die digitale Abtastung mittels eines A/D-Wandlers zu den digitalen Einzelsignalen 9, 10 digitalisiert. Auch die digitalisierten Einzelsignale 9, 10 sind um 4,5° zueinander phasenverschoben und haben eine Periode von 6°. Daraus ergibt sich, daß alle 1,5° eines der beiden digitalen Einzelsignale 9 oder 10 eine steigende oder fallende Flanke aufweist. Diese Flanken werden von einem Zähler erfaßt und das Ergebnis der Grobbestimmung ausgegeben. Im vorliegenden Fall zählt der Zähler sieben Flanken, was gemäß der Grobbestimmung einer Winkeländerung von 7 · 1,5° = 10,5° bedeutet. Tatsächlich kann sich die Winkeländerung jedoch zwischen 10,5° und 12° bewegen. Aufgrund der Auflösung von 1,5° ist jedoch eine genauere Messung der Winkeländerung mithilfe der digitalen Abtastung nicht möglich.

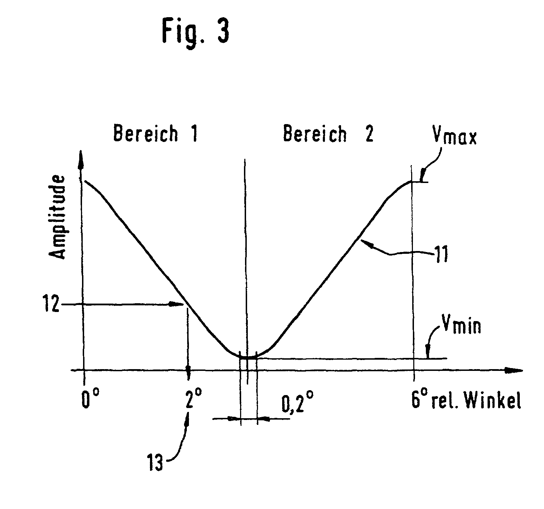

Aus diesem Grund wird das Ergebnis der Grobbestimmung durch eine Feinbestimmung korrigiert. Dazu werden die beiden Einzelsignale 7, 8 zu einem analogen Summensignal 11 addiert. Die Periode des Summensignals 11 im Bereich des Ergebnisses der Grobbestimmung ist in Fig. 3 vergrößert dargestellt. Auf der Abszisse ist der relative Winkel innerhalb der dargestellten Periode dargestellt. Der relative Winkel von 0° entspräche einem Wert der absoluten Winkeländerung von 9,75° (das Maximum $V_{max}$ des Summensignals 11 liegt genau zwischen 9° und 10,5°). Auf der Ordinate ist die Amplitude aufgetragen. Im Rahmen der Feinbestimmung wird dem Amplitudenwert 12 des Summensignals 11 ein Kennlinienwert 13 aus einer abgespeicherten Look-Up-Tabelle zugeordnet.

Da in der Look-Up-Tabelle nur die Kennlinienwerte im Bereich von 0° bis 3° (Bereich 1) bzw. von 3° bis 6° (Bereich 2) abgespeichert sind, muß im Rahmen der Bereichserkennung zunächst bestimmt werden, in welchem Bereich das Ergebnis der Grobbestimmung liegt. Dazu wird der Amplitudenwert A des ersten analogen Einzelsignals 7 mit dem Amplitudenwert A des zweiten analogen Einzelsignals 8 verglichen. Es gilt:

$$A(\text{Signal 1}) < A(\text{Signal 2}) \Rightarrow \text{Bereich 1}$$

$$A(\text{Signal 1}) > A(\text{Signal 2}) \Rightarrow \text{Bereich 2}$$

Im vorliegenden Fall liegt der Kennlinienwert 13 im Bereich 1, und es ergibt sich 2° als Ergebnis der Feinbestimmung. Als Wert der korrigierten Winkeländerung erhält man somit 9,75° + 2° = 11,75°.

Anhand des Ergebnisses der Grobbestimmung (10,5°) kann das korrigierte Ausgangssignal (11,75°) überprüft werden. Das korrigierte Ausgangssignal muß nämlich aufgrund des Ergebnisses der Grobbestimmung (10,5°) und der Auflösung der Grobbestimmung (1,5°) in dem Bereich zwischen 10,5° und 12° liegen. Im Rahmen einer Plausibilitätsprüfung wird festgestellt, ob diese Bedingung erfüllt ist. Im vorliegenden Fall ist die Bedingung erfüllt und das korrigierte Ausgangssignal (11,75°) wird ausgegeben. Wäre die Bedingung nicht erfüllt, würde das Ergebnis der Grobbestimmung (10,5°) ausgegeben werden.

**Patentansprüche**

1. Verfahren zum Messen einer Wegänderung eines bewegbaren Teils relativ zu einem festen Bezugspunkt, bei dem eine mit dem bewegten Teil verbundene Inkrementalspur (1) an dem Bezugspunkt digital abgetastet wird und aus dem Ergebnis der digitalen Abtastung ein Ausgangssignal erzeugt wird, das ein Maß für die Wegänderung ist, und bei dem die digitale Abtastung zur Grobbestimmung der Wegänderung dient, wobei zur Feinbestimmung der Wegänderung die Inkrementalspur (1) an dem Bezugspunkt an zwei zueinander phasenverschobenen Stellen analog abgetastet wird und wobei die so erhaltenen analogen Einzelsignale (7, 8) zu einem analogen Summensignal addiert werden, **dadurch gekennzeichnet, dass** die beiden analogen Einzelsignale bezüglich ihrer Amplituden ausgewertet werden, abhängig von diesem Vergleich dem Wert des analogen Summensignals (11) ein erster oder ein zweiter Kennlinienwert aus einer Look-up-Tabelle zugeordnet wird und aus der Summe des Ergebnisses der digitalen Abtastung und dem Kennlinienwert (13) ein korrigiertes Ausgangssignal gebildet wird.

2. Verfahren nach Anspruch 1, **dadurch gekennzeichnet, daß** die Kennlinienwerte in der Lookup-Tabelle eine höhere Auflösung haben als die Auflösung der Grobbestimmung.

3. Verfahren nach einem der Ansprüche 1 oder 2, **dadurch gekennzeichnet, daß** die Inkrementalspur (1) analog abgetastet wird und das Signal der analogen Abtastung (7, 8) für die digitale Abtastung digitalisiert wird.

4. Verfahren nach Anspruch 3, **dadurch gekennzeichnet, daß** das Signal der analogen Abtastung mittels eines A/D-Wandlers digitalisiert wird.

5. Verfahren nach einem der Ansprüche 1 bis 4, **dadurch gekennzeichnet, daß** die analoge Abtastung mittels mindestens einer elektromagnetischen Strahlenquelle und einem Empfänger für elektromagnetische Strahlung erfolgt.

6. Verfahren nach Anspruch 5, **dadurch gekennzeichnet, daß** die analoge Abtastung mittels zweier elektromagnetischer Strahlenquellen erfolgt, denen jeweils ein Empfänger für elektromagnetische Strahlung zugeordnet ist, wobei die analogen Einzelsignale der Empfänger zu dem Signal der analogen Abtastung addiert werden.

7. Verfahren nach Anspruch 6, **dadurch gekennzeichnet, daß** die analoge Abtastung mittels zweier Lichtquellen und zweier Lichtsensoren erfolgt.

8. Verfahren nach Anspruch 7, **dadurch gekennzeichnet, daß** als Lichtquellen für die analoge Abtastung Infrarot-Leuchtdioden (IR-LED) (5) eingesetzt werden.

9. Verfahren nach Anspruch 7 oder 8, **dadurch gekennzeichnet, daß** als Lichtsensoren für die analoge Abtastung Fototransistoren (6) eingesetzt werden.

10. Verfahren nach einem der Ansprüche 7 bis 9, **dadurch gekennzeichnet, daß** die Lichtquellen und die den Lichtquellen zugeordneten Lichtsensoren auf entgegengesetzten Seiten der Inkrementalspur (1) angeordnet werden.

11. Verfahren nach einem der Ansprüche 7 bis 10, **dadurch gekennzeichnet, daß** die Lichtquellen und die den Lichtquellen zugeordneten Lichtsensoren auf der gleichen Seite der Inkrementalspur (1) angeordnet werden.

12. Verfahren nach einem der Ansprüche 7 bis 11, **dadurch gekennzeichnet, daß** durch eine Ermittlung der Phasenverschiebung der analogen Einzelsignale (7, 8) der beiden Empfänger die Bewegungsrichtung der Inkrementalspur (1) bestimmt wird.

13. Verfahren nach einem der Ansprüche 7 bis 12, **dadurch gekennzeichnet, daß** die Sensorelemente, bestehend aus Lichtquelle und Lichtsensor, derart zueinander versetzt angeordnet werden, daß die Abtastpunkte auf der Inkrementalspur (1) abhängig

von der Auflösung $\triangle s$ der Grobbestimmung um

$$s_{\text{vers}} = (n - 1/4) \cdot \triangle s, \text{ mit } n = 1, 2, 3, \ldots$$

versetzt sind.

14. Verfahren nach einem der Ansprüche 1 bis 13, **dadurch gekennzeichnet, daß** von dem korrigierten Ausgangssignal der Offset zwischen Feinbestimmung und Grobbestimmung der Wegänderung subtrahiert wird.

15. Verfahren nach Anspruch 14, **dadurch gekennzeichnet, daß** der Offset dadurch ermittelt wird, daß der gemessene Wert der Feinbestimmung mit dem gemessenen Wert der Grobbestimmung dann verglichen wird, wenn das digitalisierte Signal der analogen Abtastung eine steigende Flanke aufweist.

16. Verfahren nach einem der Ansprüche 7 bis 15, **dadurch gekennzeichnet, daß** die Kennlinien der Empfänger derart dynamisch geregelt werden, daß die Empfänger stets in ihrem Arbeitspunkt arbeiten.

17. Verfahren nach Anspruch 16, **dadurch gekennzeichnet, daß** für die dynamische Kennlinienregelung die Maxima der analogen Einzelsignale ermittelt werden, die Lage der Maxima mit einem Sollwert verglichen wird und bei einer Differenz zwischen Ist- und Sollwert eine Korrektur durchgeführt wird.

18. Verfahren nach Anspruch 17, **dadurch gekennzeichnet, daß** zum Verschieben der Kennlinie des Empfängers in den Arbeitspunkt des Empfängers der IR-LED-Strom verändert wird.

19. Verfahren nach Anspruch 18, **dadurch gekennzeichnet, daß** die IR-LED-Ströme vor dem Beenden des Verfahrens gespeichert werden.

20. Verfahren nach einem der Ansprüche 1 bis 19, **dadurch gekennzeichnet, daß** die Signale der analogen Abtastung mittels eines Tiefpass-Filters geglättet werden.

21. Verfahren nach Anspruch 20, **dadurch gekennzeichnet, daß** die Signale der analogen Abtastung mittels eines Tiefpass-Filters mit einer Grenzfrequenz von ungefähr dem zehnfachen der höchsten Frequenz der Signale der analogen Abtastung geglättet werden.

22. Verfahren nach einem der Ansprüche 1 bis 21, **dadurch gekennzeichnet, daß** vor der Ausgabe des korrigierten Ausgangssignals dieses mit dem Ergebnis der Grobbestimmung verglichen wird und daß, falls die Differenz zwischen dem korrigierten Ausgangssignal und dem Ergebnis der Grobbestimmung einen Schwellenwert übersteigt, das Ergebnis der Grobbestimmung anstatt des korrigierten Ausgangssignals ausgegeben wird.

23. Verfahren nach Anspruch 22, **dadurch gekennzeichnet, daß** der Schwellenwert gleich einem Drittel der maximalen Auflösung der Grobbestimmung gewählt wird.

24. Weggeber zum Messen einer Wegänderung eines bewegbaren Teils relativ zu einem festen Bezugspunkt, der mindestens eine mit dem bewegten Teil verbundene Inkrementalspur (1), eine an dem Bezugspunkt angeordnete digitale Abtasteinheit, die die Inkrementalspur (1) digital abtastet, und eine Verarbeitungseinheit aufweist, die das Signal der digitalen Abtastung verarbeitet und aus dem Ergebnis der digitalen Abtastung ein Ausgangssignal erzeugt, das ein Maß für die Wegänderung ist, wobei der Weggeber eine analoge Abtasteinheit aufweist, die die Inkrementalspur (1) an zwei zueinander phasenverschobenen Stellen analog abtastet, wobei der Weggeber eine Korrektureinheit aufweist, die das Ausgangssignal mithilfe des Ergebnisses der analogen Abtastung korrigiert, und und wobei die so erhaltenen analogen Einzelsignale (7, 8) in einer Verarbeitungseinheit zu einem analogen Summensignal addiert werden, **dadurch gekennzeichnet, dass** die beiden analogen Einzelsignale bezüglich ihrer Amplituden ausgewertet werden, abhängig von diesem Vergleich dem Wert des analogen Summensignals (11) ein erster oder ein zweiter Kennlinienwert aus einer Look-up-Tabelle zugeordnet wird und aus der Summe des Eregbnisses der digitalen Abtastung und dem Kennlinienwert ein korrigiertes Ausgangssignal gebildet wird.

25. Weggeber nach Anspruch 24, **dadurch gekennzeichnet, daß** der Weggeber nach dem Verfahren nach den Ansprüchen 1 bis 23 arbeitet.

26. Weggeber nach Anspruch 24 oder 25, **dadurch gekennzeichnet, daß** der Weggeber als Winkelgeber ausgebildet ist.

27. Weggeber nach Anspruch 26, **dadurch gekennzeichnet, daß** der Weggeber als Lenkwinkelsensor zur Bestimmung des Lenkradeinschlags in Kraftfahrzeugen ausgebildet ist.

**Claims**

1. Process for measuring a variation in displacement of a movable part relative to a fixed reference point, in which an incremental track (1) connected to the moved part is digitally scanned at the reference point and an output signal is produced from the result of the digital scanning which is a measurement of the variation in displacement, and in which digital scanning serves as an approximate determination of the variation in displacement, the incremental track (1) being scanned in an analogue manner at the reference point at two positions which are phase displaced to one another to accurately determine the variation in displacement, the analogue individual signals (7, 8) obtained in this way being added to an analogue summation signal, **characterised in that** the two analogue individual signals are evaluated with respect to their amplitudes, a first or a second characteristic curve value from a look-up table being associated with the value of the analogue summation signal (11) as a function of this comparison, and a corrected output signal being formed from the sum of the result of digital scanning and the characteristic curve value (13).

2. Process according to claim 1, **characterised in that** the characteristic curve values in the look-up table have a higher resolution than the resolution of the approximate determination.

3. Process according to any one of claims 1 or 2, **characterised in that** the incremental track (1) is scanned in an analogue manner and the signal from the analogue scanning (7, 8) is digitised for digital scanning.

4. Process according to claim 3, **characterised in that** the signal from the analogue scanning is digitised by an analogue-to-digital converter.

5. Process according to any one of claims 1 to 4, **characterised in that** analogue scanning is by means of at least one electromagnetic radiation source and a receiver for electromagnetic radiation.

6. Process according to claim 5, **characterised in that** analogue scanning is by means of two electromagnetic radiation sources, one receiver respectively for electromagnetic radiation being associated therewith, the analogue individual signals of the receiver being added to the signal from the analogue scanning.

7. Process according to claim 6, **characterised in that** analogue scanning is by means of two light sources and two light sensors.

8. Process according to claim 7, **characterised in that** infrared light-emitting diodes (IR-LED) (5) are used as light sources for analogue scanning.

9. Process according to claim 7 or 8, **characterised in that** phototransistors (6) are used as light sensors for analogue scanning.

10. Process according to any one of claims 7 to 9, **characterised in that** the light sources and the light sensors associated with the light sources are arranged on opposing sides of the incremental track (1).

11. Process according to any one of claims 7 to 10, **characterised in that** the light sources and the light sensors associated with the light sources are arranged on the same side of the incremental track (1).

12. Process according to any one of claims 7 to 11, **characterised in that** the movement direction of the incremental track (1) is determined by ascertaining the phase variation in displacement of the analogue individual signals (7, 8) of the two receivers.

13. Process according to any one of claims 7 to 12, **characterised in that** the sensor elements, consisting of light source and light sensor, are arranged offset to one another in such a way that the scanning points on the incremental track (1) are offset as a function of the resolution $\Delta s$ of the approximate determination by

$$s_{\text{offset}} = (n - \llbracket) \cdot \triangle s, \text{ where } n = 1, 2, 3, \dots .$$

14. Process according to any one of claims 1 to 13, **characterised in that** the offset between accurate determination and approximate determination of the displacement is subtracted from the corrected output signal.

15. Process according to claim 14, **characterised in that** the offset is ascertained **in that** the measured value of the accurate determination is compared with the measured value of the approximate determination if the digitised signal from the analogue scanning exhibits an increasing slope.

16. Process according to any one of claims 7 to 15, **characterised in that** the characteristic curves of the receivers are dynamically regulated in such a way that the receivers always operate in their working point.

17. Process according to claim 16, **characterised in that** the maximums of the analogue individual signals are ascertained, the position of the maximums is compared with a desired value and a correction is made in the event of a difference between actual and desired value for dynamic characteristic curve control.

18. Process according to claim 17, **characterised in that** the IR-LED current is changed to displace the characteristic curve of the receiver into the working point of the receiver.

19. Process according to claim 18, **characterised in that** the IR-LED currents are stored before terminating the process.

20. Process according to any one of claims 1 to 19, **characterised in that** the signals from analogue scanning are filtered by means of a low-pass filter.

21. Process according to claim 20, **characterised in that** the signals from analogue scanning are filtered by means of a low-pass filter with a cut-off frequency of approximately ten times the highest frequency of the signals from digital scanning.

22. Process according to any one of claims 1 to 21, **characterised in that** before the corrected output signal is emitted it is compared with the result of the approximate determination, and **in that** the result of the approximate determination is emitted instead of the corrected output signal if the difference between the corrected output signal and the result of the approximate determination exceeds a threshold value.

23. Process according to claim 22, **characterised in that** the threshold value is selected to equal a third of the maximum resolution of the approximate determination.

24. Displacement sensor for measuring a variation in displacement of a movable part relative to a fixed reference point, which has at least one incremental track (1) connected to the moved part, a digital scanning unit arranged on the reference point which digitally scans the incremental track (1), and a processing unit which processes the signal from digital scanning and produces an output signal from the result of the digital scanning, which output signal is a measurement of the variation in displacement, the displacement sensor having an analogue scanning unit which scans the incremental track (1) in an analogue manner at two positions which are phase displaced to one another, the displacement sensor having a correction unit which corrects the output signal with the aid of the result from analogue scanning, and the analogue individual signals (7, 8) obtained in this way being added in a processing unit to an analogue summation signal, **characterised in that** the two analogue individual signals are evaluated with respect to their amplitudes, a first or a second characteristic curve value from a look-up table being associated with the value of the analogue summation signal (11) as a function of this comparison, and a corrected output signal being formed from the total of the result of digital scanning and the characteristic curve value.

25. Displacement sensor according to claim 24, **characterised in that** the displacement sensor operates in accordance with the process according to claims 1 to 23.

26. Displacement sensor according to claim 24 or 25, **characterised in that** the displacement sensor is designed as a phase-angle sensor.

27. Displacement sensor according to claim 26, **characterised in that** the displacement sensor is designed as a steer angle sensor to determine the turning angle of the steering wheel in motor vehicles.

**Revendications**

1. Procédé pour mesurer une variation de déplacement d'une pièce mobile par rapport à un point de référence fixe, selon lequel une piste incrémentale (1), qui est reliée à la pièce mobile, est explorée de façon numérique au niveau du point de référence, et un signal de sortie, qui est une mesure de la variation de déplacement, est produit à partir du résultat de l'exploration numérique, et selon lequel l'exploration numérique est utilisée pour réaliser la détermination approximative de la variation de déplacement, et selon lequel pour la détermination précise de la variation de déplacement, la piste incrémentale (1) est explorée de façon analogique au niveau du point de référence en deux emplacements déphasés l'un par rapport à l'autre, et les signaux individuels analogiques (7, 8) ainsi obtenus sont additionnés pour former un signal somme analogique, **caractérisé en ce que** les amplitudes des deux signaux individuels analogiques sont évaluées, que sur la base de cette comparaison, une première valeur de courbe caractéristique ou une seconde valeur de courbe caractéristique tirée d'une table de consultation est associée au signal somme analogique (11), et qu'un signal de sortie corrigé est formé à partir de la somme du résultat de l'exploration numérique et de la valeur (13) de courbes caractéristiques.

2. Procédé selon la revendication 1, **caractérisé en ce que** les valeurs de courbes caractéristiques contenues dans la table de consultation possèdent une résolution supérieure à la résolution de la détermination approximative.

3. Procédé selon l'une des revendications 1 ou 2, **caractérisé en ce que** la piste incrémentale (1) est explorée de façon analogique et le signal de l'exploration analogique (7,8) est numérisé pour l'exploration numérique.

4. Procédé selon la revendication 3, **caractérisé en ce que** le signal de l'exploration analogique est numérisé au moyen d'un convertisseur analogique/numérique.

5. Procédé selon l'une des revendications 1 à 4, **caractérisé en ce que** l'exploration analogique est réalisée à l'aide d'au moins une source de rayonnement électromagnétique et d'un récepteur pour le rayonnement électromagnétique.

6. Procédé selon la revendication 5, **caractérisé en ce que** l'exploration analogique est réalisée à l'aide de deux sources de rayonnement électromagnétique, auxquelles est associé un récepteur pour le rayonnement électromagnétique, les signaux analogiques individuels des récepteurs étant additionnés pour former le signal de l'exploration analogique.

7. Procédé selon la revendication 6, **caractérisé en ce que** l'exploration analogique s'effectue à l'aide de deux sources de lumière et de deux capteurs de lumière.

8. Procédé selon la revendication 7, **caractérisé en ce qu'**on utilise comme sources de lumière pour l'exploration analogique, des diodes luminescentes à infrarouge (IR-LED) (5).

9. Procédé selon la revendication 7 ou 8, **caractérisé en ce qu'**on utilise comme capteurs de lumière, pour l'exploration analogique, des phototransistors (6).

10. Procédé selon l'une des revendications 7 à 9, **caractérisé en ce que** les sources de lumière et les capteurs de lumière, associés aux sources de lumière, sont disposés sur des côtés opposés de la piste incrémentale (1).

11. Procédé selon l'une des revendications 7 à 10, **caractérisé en ce que** les sources de lumière et les capteurs de lumière associés aux sources de lumière sont disposés du même côté de la piste incrémentale (1).

12. Procédé selon l'une des revendications 7 à 11, **caractérisé en ce que** la direction de déplacement de la pièce incrémentale (1) est déterminée au moyen d'une détermination du déphasage des signaux analogiques individuels (7,8) des deux récepteurs.

**13.** Procédé selon l'une des revendications 7 à 12, **caractérisé en ce que** les éléments formant capteurs, qui sont constitués par une source de lumière et un capteur de lumière, sont disposés d'une manière réciproquement décalée de telle sorte que les points d'exploration sur la piste incrémentale (1) sont décalés de

$$S_{vers} = (n - 1/4) \cdot \Delta s, \text{ avec } n = 1, 2, 3, ...$$

en fonction de la résolution $\Delta s$ de la détermination approximative.

**14.** Procédé selon l'une des revendications 1 à 13, **caractérisé en ce que** le décalage entre la détermination précise et la détermination approximative de la variation de distance est extraite du signal de sortie corrigé.

**15.** Procédé selon la revendication 14, **caractérisé en ce que** le décalage est obtenu par le fait que la valeur mesurée de la détermination précise est comparée à la valeur mesurée de la détermination approximative lorsque le signal numérisé de l'exploration analogique possède un flanc pentu.

**16.** Procédé selon l'une des revendications 7 à 15, **caractérisé en ce que** les courbes caractéristiques du récepteur sont réglées de façon dynamique de telle sorte que les récepteurs travaillent en permanence au niveau de leur point de fonctionnement.

**17.** Procédé selon la revendication 16, **caractérisé en ce que** pour la régulation dynamique des courbes caractéristiques, on détermine les maxima des signaux analogiques individuels, on compare la position des maxima à une valeur de consigne et on effectue une correction dans le cas où il existe une différence entre la valeur réelle et la valeur de consigne.

**18.** Procédé selon la revendication 17, **caractérisé en ce que** pour amener la courbe caractéristique du récepteur au point de fonctionnement du récepteur, on modifie le courant de la diode IR-LED.

**19.** Procédé selon la revendication 18, **caractérisé en ce que** les courants de la diode IR-LED sont mémorisés avant l'achèvement du procédé.

**20.** Procédé selon l'une des revendications 1 à 19, **caractérisé en ce que** les signaux de l'exploration analogique sont lissés à l'aide d'un filtre passe-bas.

**21.** Procédé selon la revendication 20, **caractérisé en ce que** les signaux de l'exploration analogique sont lissés au moyen d'un filtre passe-bas possédant une fréquence limite égale environ au dixième de la fréquence maximale des signaux de l'exploration analogique.

**22.** Procédé selon l'une des revendications 1 à 21, **caractérisé en ce qu'**avant la délivrance du signal de sortie corrigé, ce dernier est comparé aux résultats de la détermination approximative et que dans le cas où la différence entre le signal de sortie corrigé et le résultat de la détermination approximative dépasse une valeur de seuil, le résultat de la détermination approximative est délivré à la place du signal de sortie corrigé.

**23.** Procédé selon la revendication 22, **caractérisé en ce que** la valeur de seuil est choisie égale au tiers de la résolution maximale de la détermination approximative.

**24.** Capteur de déplacement servant à mesurer une variation de déplacement d'une pièce mobile par rapport à un point de référence fixe, qui comporte au moins une piste incrémentale (1) reliée à la pièce mobile, une unité d'exploration numérique disposée au niveau du point de référence et qui explore numériquement la piste incrémentale (1), et une unité de traitement, qui traite le signal d'exploration numérique et produit, à partir du résultat de l'exploration numérique, un signal de sortie qui est une mesure de la variation de la distance, dans lequel le capteur de distance possède une unité d'exploration analogique, qui explore de façon analogique la piste incrémentale (1) en deux emplacements déphasés l'un de l'autre, et le capteur de déplacement comporte une unité de correction, qui corrige le signal de sortie au moyen du résultat de l'exploration analogique, et les signaux analogiques individuels (7,8) ainsi obtenus sont additionnés dans une unité de traitement pour former un signal somme analogique, **caractérisé en ce que** les amplitudes des deux signaux individuels analogiques sont évaluées, que sur la base de cette comparaison, une première valeur de courbe caractéristique ou une seconde valeur de courbe caractéristique tirée d'une table de consultation est associée au signal somme analogique (11), et qu'un signal de sortie corrigé est formé à partir de la somme du résultat de l'exploration numérique et de la valeur de courbe caractéristique.

**25.** Capteur de distance selon la revendication 24, **caractérisé en ce que** le capteur de distance fonctionne conformément au procédé selon l'une des revendications 1 à 23.

**26.** Capteur de déplacement selon la revendication 24 ou 25, **caractérisé en ce que** le capteur de déplacement est agencé sous la forme d'un capteur angulaire.

27. Capteur de déplacement selon la revendication 26, **caractérisé en ce que** le capteur de déplacement est agencé sous la forme d'un capteur de l'angle de braquage servant à déterminer le braquage du volant dans des véhicules automobiles.

Fig. 1

# Fig. 2

# Fig. 3

Bereich 1 | Bereich 2 | Vmax

Amplitude

12

Vmin

0° | 2° | 0,2° | 6° rel. Winkel

11

13